# EUROPÄISCHE PATENTSCHRIFT

(11) **EP 4 113 000 B1**
(45) Veröffentlichungstag und Bekanntmachung des Hinweises auf die Patenterteilung: **03.09.2025**
(21) Anmeldenummer: 22181527.7
(22) Anmeldetag: 28.06.2022
(51) Int. Cl.: F21S 41/148, F21S 41/19, F21S 41/32, F21S 43/14, F21S 43/19, F21S 43/31, F21S 43/20, F21S 43/40, F21S 45/47, F21S 45/49, B62J 6/022, F21K 9/232

(54) **BELEUCHTUNGSVORRICHTUNG FÜR EINEN SCHEINWERFER**
ILLUMINATION DEVICE FOR A MOTOR VEHICLE HEADLIGHT
DISPOSITIF D'ÉCLAIRAGE POUR UN PHARE

(30) Priorität: 01.07.2021 AT 505482021
(43) Veröffentlichungstag der Anmeldung: 04.01.2023
(73) Patentinhaber: KTM AG, 5230 Mattighofen (AT)
(72) Erfinder: HIRSCHBICHLER, Daniel, 5091 Unken (AT); KREMZER, Zbynek, 5221 Lochen am See (AT)
(74) Vertreter: Torggler & Hofmann Patentanwälte - Innsbruck

(56) Entgegenhaltungen:
- EP-A1- 2 921 348
- WO-A1-2013/071972
- WO-A1-2019/087142
- DE-A1- 102010 044 062
- DE-U1- 202005 007 501
- JP-A- 2017 079 116
- TW-U- M 539 600
- US-A1- 2009 002 997
- US-A1- 2018 356 061

## Beschreibung

Die Erfindung betrifft eine Beleuchtungsvorrichtung für einen Scheinwerfer, insbesondere eines einspurigen Fahrzeugs, umfassend einen Leuchtelementträger mit einer Längsrichtung, wobei mindestens ein Abblendleuchtelement, mindestens ein Fernleuchtelement und mindestens zwei Positionsleuchtelemente am Leuchtelementträger angeordnet sind.

Weiters betrifft die Erfindung einen Scheinwerfer mit einer Beleuchtungsvorrichtung und ein einspuriges Fahrzeug mit einem solchen Scheinwerfer.

Zudem betrifft die Erfindung ein Verfahren zur Herstellung einer Beleuchtungsvorrichtung und ein Verfahren zur Herstellung eines Scheinwerfers.

Zur Erfüllung der vorgeschriebenen Haupt- und Signallichtfunktion umfasst ein Kraftfahrzeug stets mehrere Leuchtelemente. Zumindest müssen Kraftfahrzeuge ein Abblendlicht, ein Fernlicht und ein Positionslicht aufweisen.

Die vorliegende Erfindung betrifft Scheinwerfer für einspurige Fahrzeuge, wobei die Scheinwerfer ebenso für andere Fahrzeuge verwendet werden können.

Vor allem für das Positionslicht wird bei gattungsgemäßen Scheinwerfern eine separate Glühfadenlampe oder eine separates Halbleiterleuchtelement verwendet.

Dies resultiert in einer höheren Bauteilanzahl und einer geringeren mechanischen Stabilität und Dichtheit des Scheinwerfers, was insbesondere bei der Verwendung in Geländemotorrädern von Gewicht ist. Zudem wird der Tausch eines defekten Leuchtelements durch das Vorhandensein mehrerer Leuchtelemente erschwert.

Aus dem Stand der Technik sind ebenfalls Beleuchtungsvorrichtungen bekannt, welche Haupt- und Signallichtfunktion in einer Beleuchtungsvorrichtung zusammenfassen. Das Dokument DE 10 2010 063 713 A1 offenbart eine Beleuchtungsvorrichtung mit Leuchtelementen, die auf einem Trageelement angeordnet sind. Dabei sind mindestens ein Abblendleuchtelement und mindestens ein Fernleuchtelement auf einem Leuchtträger angeordnet, während mindestens ein Positionsleuchtelement auf einem Kühlkörper angeordnet ist, von welchem der Leuchtträger absteht.

Nachteilig an diesem Stand der Technik ist, dass das mindestens eine Positionsleuchtelement im Bereich des Reflektors des Scheinwerfers, entweder als Streifen im Reflektor oder als mehrere Punktlichtquellen, angeordnet ist.

Zur Anordnung des mindestens einen Positionsleuchtelements ist daher ein speziell angepasster Reflektor, welcher beispielsweise einen Spalt oder eine Ausnehmung aufweist, notwendig.

Durch Anordnung des mindestens einen Positionsleuchtelementes im Bereich des Reflektors kann die Lichtverteilung des Positionslichts nur bedingt angepasst werden.

Das Dokument JP 2017 079 116 A zeigt einen Scheinwerfer für ein Motorrad. Es ist ein boxförmiger oder hexagonaler Leuchtelementträger vorgesehen, welcher an der Oberseite eine LED für das Abblendlicht und an der Unterseite eine LED für das Fernlicht aufweist. An einer Vorderseite des Leuchtelementträgers ist mindestens eine LED für ein Positionslicht angeordnet.

Die Dokumente WO 2019/087142 A1 und DE 10 2010 044062 A1 zeigen ebenfalls einen Scheinwerfer. An zwei gegenüberliegenden Seiten ist jeweils eine Lichtquelle für Abblend- und Fernlicht vorgesehen. An einer Stirnseite des Leuchtelementträgers ist eine Lichtquelle für ein Positionslicht angeordnet.

Die Aufgabe dieser Erfindung ist es, eine modulare Beleuchtungsvorrichtung mit einer anpassbaren Lichtverteilung zu schaffen und/oder einen Scheinwerfer mit einer solchen Beleuchtungsvorrichtung zu schaffen.

Diese Aufgabe wird durch die Gegenstände aus Anspruch 1, Anspruch 10, Anspruch 13, Anspruch 14 und Anspruch 15 gelöst.

Erfindungsgemäß ist vorgesehen, dass das mindestens eine Positionsleuchtelement in einem, in Bezug auf die Längsrichtung vorderen, Endbereich des Leuchtelementträgers angeordnet ist und wobei das mindestens eine Abblendleuchtelement und das mindestens eine Fernleuchtelement in Bezug auf die Längsrichtung hinter dem mindestens einen Positionsleuchtelement angeordnet sind. Es sind mindestens zwei Positionsleuchtelemente vorgesehen.

Dadurch, dass die mindestens zwei Positionsleuchtelemente in einem, in Bezug auf die Längsrichtung vorderen, Endbereich des Leuchtelementträgers angeordnet sind, können die mindestens zwei Positionsleuchtelemente in einem im Scheinwerfer montierten Zustand vom Reflektor entfernt angeordnet werden. Von den mindestens zwei Positionsleuchtelementen ausgestrahlten Lichts kann direkt oder über den Reflektor aus dem Scheinwerfer austreten. Abhängig von den Dimensionen des Leuchtelementträgers und der Konfiguration der mindestens zwei Positionsleuchtelemente kann damit die Lichtverteilung durch die Positionierung im Endbereich des Leuchtelementträgers flexibel angepasst werden.

Dadurch, dass das mindestens eine Abblendleuchtelement und das mindestens eine Fernleuchtelement in Bezug auf die Längsrichtung hinter den mindestens zwei Positionsleuchtelementen angeordnet sind, wird ermöglicht, dass die Leuchtelemente jeweils eine unterschiedliche Lichtverteilung erzeugen.

In einem bevorzugten Ausführungsbeispiel ist vorgesehen, dass im Endbereich ein transmittierendes optisches Element um die mindestens zwei Positionsleuchtelemente angeordnet ist. Die Lichtverteilung der mindestens zwei Positionsleuchtelemente ist durch das transmittierende optische Element beeinflussbar. Insbesondere kann damit eine räumlich weiter ausgedehnte Lichtverteilung geschaffen werden. Damit kann Licht trotz der Position der mindestens zwei Positionsleuchtelemente im Endbereich des Leuchtelementträgers in einen Reflektor abgelenkt werden.

Vorzugsweise ist das transmittierende optische Element als Streuscheibe ausgebildet und/oder weist eine vertikale Riffelung und/oder aneinandergereihte Zylinderlinsen auf.

In einem weiteren Ausführungsbeispiel ist im Endbereich ein reflektierendes optisches Element um die mindestens zwei Positionsleuchtelemente angeordnet, sodass die Lichtverteilung der mindestens zwei Positionsleuchtelemente durch das reflektierende optische Element beeinflussbar ist.

Weiters kann das reflektierende optische Element so angeordnet sein, dass die mindestens zwei Positionsleuchtelemente von dem mindestens einen Abblendleuchtelement und dem mindestens einen Fernleuchtelement abgeschattet sind. Damit kann die Lichtverteilung der Leuchtelemente unabhängig voneinander angepasst werden.

Insbesondere kann das reflektierende optische Element eine, vorzugsweise konkave, Kontur aufweisen und/oder in Bezug auf die Längsrichtung hinter den mindestens zwei Positionsleuchtelementen angeordnet sein. Damit kann Licht von den mindestens zwei Positionselementen, welches nach hinten abgestrahlt wird, vom Reflektor nach vorne reflektiert werden. Damit kann die Lichtausbeute erhöht werden, womit weniger Energie verbraucht wird und weniger Wärme erzeugt wird.

Vom reflektierenden optischen Element reflektiertes Licht kann im späteren Strahlenverlauf durch das transmittierende optische Element strahlen. Die Lichtverteilung des Positionslichts kann demnach durch die Wahl des transmittierenden und des reflektierenden optischen Elements in Kombination mit der Anordnung im Reflektor des Scheinwerfers bestimmt werden.

Bevorzugt ist das reflektierende optische Element aus einem wärmeleitenden Material gefertigt, wobei das wärmeleitende Material Wärme von den mindestens zwei Positionsleuchtelementen an einen Kühlkörper ableiten kann.

Erfindungsgemäß sind die mindestens zwei Positionsleuchtelemente auf zwei entgegengesetzten Seiten des Leuchtelementträgers angeordnet. Damit kann eine symmetrische Lichtverteilung geschaffen werden, insbesondere kann damit die Ober- und die Unterseite des Reflektors ausgestrahlt werden.

Es kann vorgesehen sein, dass das mindestens eine Abblendleuchtelement und das mindestens eine Fernleuchtelement auf zwei entgegengesetzten Seiten des Leuchtelementträgers angeordnet sind. Damit sind die beiden Leuchtelemente voneinander abgeschattet. Das mindestens eine Abblendleuchtelement ist dabei vorzugsweise an einer Oberseite angeordnet, sodass Licht nach oben abgestrahlt wird und vom Reflektor nach vorne und nach unten reflektiert wird. Das mindestens eine Fernleuchtelement ist dabei vorzugsweise an einer Unterseite angeordnet, sodass Licht nach unten abgestrahlt wird und vom Reflektor nach vorne und teilweise nach oben reflektiert wird.

Es kann zudem vorgesehen sein, dass das mindestens eine Abblendleuchtelement und das mindestens eine Fernleuchtelement in Längsrichtung zueinander versetzt angeordnet sind. Da somit die Leuchtelemente jeweils einen eigenen longitudinalen Abschnitt des Leuchtelementträgers aufweisen, kann Wärme besser abgeführt werden. Zudem wird weniger Wärme vom mindestens einen Abblendleuchtelement an das mindestens eine Fernleuchtelement, oder umgekehrt, abgegeben als bei sich direkt gegenüberliegenden Leuchtelementen.

In einem Ausführungsbeispiel weist die Beleuchtungsvorrichtung einen Kühlkörper auf, wobei der Leuchtelementträger am Kühlkörper angeordnet ist, sodass der, in Bezug auf die Längsrichtung vordere, Endbereich des Leuchtelementträgers vom Kühlkörper abgewandt ist. Damit wird eine Beleuchtungsvorrichtung geschaffen, welche am einen Ende einen Kühlkörper aufweist und am anderen Ende mindestens zwei Positionsleuchtelemente.

Der Kühlkörper kann Kühlrippen aufweisen, sodass Wärme besser an die Umgebung abgegeben werden kann. Zudem kann im Kühlkörper eine Steuervorrichtung angeordnet sein, welche vom Kühlkörper gekühlt wird. Die Steuervorrichtung ist zur Steuerung der Leuchtelemente vorgesehen.

Es kann vorgesehen sein, dass am Leuchtelementträger ein Wärmeleitteil angeordnet ist, wobei der Wärmeleitteil mit dem Kühlkörper verbunden ist, sodass Wärme vom Leuchtelementträger in den Kühlkörper leitbar ist. Dies dient zur Kühlung der Leuchtelemente. Insbesondere das mindestens eine Abblendleuchtelement und/oder das mindestens einen Fernleuchtelement produzieren viel Hitze und sollten daher gekühlt werden.

Dabei kann vorgesehen sein, dass der Wärmeleitteil mit dem Kühlkörper einteilig verbunden ist. Damit ist eine besonders gute Wärmeleitung vom Wärmeleitteil an den Kühlkörper garantiert. Zudem ist die Beleuchtungsvorrichtung damit stabiler aufgebaut. Der Wärmeleitteil und/oder der Kühlkörper sind vorzugsweise aus Aluminium gefertigt.

"Einteilig verbunden" kann "stoffschlüssig" verbunden oder "aus einem durchgängigen Bauteil gefertigt" bedeuten.

Das mindestens eine Abblendleuchtelement und/oder das mindestens eine Fernleuchtelement und/oder die mindestens zwei Positionsleuchtelemente können in einer Ausnehmung des Wärmeleitteils angeordnet sein, wobei sie besonders bevorzugt vom Wärmeleitteil umfasst werden. Damit kann Wärme besonders effizient von den Leuchtelementen abgeführt werden. Zudem können die Leuchtelemente im Inneren des Wärmeleitteils, beispielsweise auf einer Platine, angeordnet sein und durch die Ausnehmungen nach Außen ragen.

Sind das mindestens eine Abblendleuchtelement und/oder das mindestens eine Fernleuchtelement in Längsrichtung zueinander versetzt angeordnet, ist der den jeweiligen Leuchtelementen entgegengesetzte Bereich vom Wärmeleitteil ausgefüllt und insbesondere frei von einem Leuchtelement. Der den jeweiligen Leuchtelementen entgegengesetzte Bereich kann demnach Wärme abführen. Durch die versetzte Anordnung kann Wärme dadurch besser von den Leuchtelementen abgeführt werden.

Es kann vorgesehen sein, dass der Wärmeleitteil im Bereich des mindestens einen Abblendleuchtelements und/oder des mindestens einen Fernleuchtelements eine Verschmälerung aufweist, sodass die Oberfläche der Leuchtelemente im Wesentlichen plan mit der Oberfläche des Wärmeleitteils verläuft. Damit müssen Leuchtelemente, welche im Inneren des Wärmeleitteils, beispielsweise auf einer Platine, angeordnet sind, weniger weit nach Außen ragen. Die Ausnehmungen können damit kürzer ausgeformt sein.

Weiterhin kann vorgesehen sein, dass der Wärmeleitteil im Endbereich eine, vorzugsweise konkave, Kontur aufweist, welche als reflektierendes optisches Element für die mindestens zwei Positionsleuchtelemente fungiert. Damit kann einerseits die Lichtausbeute der mindestens zwei Positionsleuchtelemente erhöht werden und andererseits Wärme von den mindestens zwei Positionsleuchtelementen abgeleitet werden. Durch die größere Lichtausbeute wird zudem von vornherein weniger Wärme erzeugt.

In einem Ausführungsbeispiel kann vorgesehen sein, dass die Beleuchtungsvorrichtung eine Platine aufweist, wobei das mindestens eine Abblendleuchtelement und/oder das mindestens eine Fernleuchtelement und/oder die mindestens zwei Positionsleuchtelemente auf der Platine angeordnet sind. Damit wird eine aufwändige und fehleranfällige Verkabelung der Leuchtelemente obsolet.

Die Platine kann vom Kühlkörper in den Leuchtelementträger ragen. Insbesondere kann sich die Platine durch den gesamten Leuchtelementträger in der Längsrichtung erstrecken. Damit können sowohl eine im Kühlkörper angeordnete Steuervorrichtung, als auch die am Leuchtelementträger angeordneten Leuchtelemente ohne Verkabelung miteinander elektrisch verbunden werden.

Zwischen der Platine und dem Kühlkörper und/oder zwischen der Platine und dem Wärmeleitteil kann Wärmeleitpaste und/oder ein Wärmeleitpad, welches vorzugsweise eine Dicke von 0,8 Millimeter aufweist, angeordnet sein. Damit kann Wärme effizienter von der Platine auf den Kühlkörper und/oder den Wärmeleitteil übertragen werden.

In einem besonders bevorzugten Ausführungsbeispiel umfasst ein erster wärmeleitender Bauteil einen Oberteil des Kühlkörpers und einen Oberteil des Wärmeleitteil und ein zweiter wärmeleitender Bauteil einen Unterteil des Kühlkörpers und einen Unterteil des Wärmeleitteils. Damit kann einerseits ein guter Wärmetransport vom Wärmeleitteil mit den Leuchtelementen zum Kühlkörper erreicht werden. Andererseits wird durch den zweiteiligen Aufbau ein Innenraum des Kühlkörpers und/oder des Wärmeleitteils zugänglich. Es wird dadurch ein einfacher Zusammenbau der Beleuchtungsvorrichtung ermöglicht.

Es kann vorgesehen sein, dass die Platine zwischen dem ersten wärmeleitenden Bauteil und dem zweiten wärmeleitenden Bauteil angeordnet ist.

Es kann auch vorgesehen sein, dass der erste wärmeleitende Bauteil und der zweite wärmeleitende Bauteil mittels mindestens eines Befestigungsmittels, insbesondere einer Schraube, aneinander befestigbar sind.

Es kann vorgesehen sein, dass das mindestens eine Abblendleuchtelement in einer ersten Ausnehmung des ersten wärmeleitenden Bauteils und das mindestens eine Fernleuchtelement in einer zweiten Ausnehmung des zweiten wärmeleitenden Bauteils angeordnet sind. Insbesondere sind dann der erste wärmeleitende Bauteil an der Oberseite und der zweite wärmeleitende Bauteil an der Unterseite angeordnet.

In einem Ausführungsbeispiel sind das mindestens eine Abblendleuchtelement, das mindestens eine Fernleuchtelement und/oder die mindestens zwei Positionsleuchtelemente als Halbleiterlichtquellen, insbesondere Leuchtdioden oder Laserdioden, ausgebildet.

Es ist bevorzugt vorgesehen, dass die Leuchtelemente im Betrieb weißes Licht ausstrahlen.

Ein erfindungsgemäßer Scheinwerfer umfasst eine Beleuchtungsvorrichtung gemäß der vorliegenden Offenbarung und weist mindestens einen, vorzugsweise konkaven, Reflektor auf, wobei im Betrieb Licht des mindestens einen Abblendleuchtelements und/oder des mindestens einen Fernleuchtelements und/oder der mindestens zwei Positionsleuchtelemente am Reflektor reflektiert wird.

Wie bereits oben beschrieben, kann die Lichtverteilung durch die Positionierung der Leuchtelemente im Reflektor beeinflusst werden. Besonders vorteilhaft ist hier die erfindungsgemäße Positionierung der mindestens zwei Positionsleuchtelemente im Endbereich des Leuchtelementträgers, und damit in einem vom Reflektor erzeugten Innenraum.

Es kann vorgesehen sein, dass der Reflektor eine Durchführung aufweist, wobei der Leuchtelementträger im Montagezustand durch die Durchführung ragt. Dabei kann der Leuchtelementträger in einem vom Reflektor erzeugten Innenraum angeordnet sein und/oder der Kühlkörper außerhalb eines vom Reflektor erzeugten Innenraums angeordnet sein. Damit ragt der Leuchtelementträger in den vom Reflektor erzeugten Innenraum, wobei die mindestens zwei Positionsleuchtelemente am weitesten nach vorne ragen.

Bevorzugt ist vorgesehen, dass das mindestens eine Abblendleuchtelement an einer ersten, insbesondere oberen Seite, des Leuchtelementträgers angeordnet ist, sodass sein Licht ausschließlich von einer ersten, insbesondere oberen, Reflektorhälfte reflektierbar ist.

Das mindestens eine Fernleuchtelement kann an einer zweiten, insbesondere unteren Seite, des Leuchtelementträgers angeordnet sein, sodass sein Licht ausschließlich von einer zweiten, insbesondere unteren, Reflektorhälfte reflektierbar ist.

Die mindestens zwei Positionsleuchtelemente können an einer ersten, insbesondere oberen, und einer zweiten, insbesondere unteren, Seite des Leuchtelementträgers angeordnet sein, sodass ihr Licht von einer ersten, insbesondere oberen, Reflektorhälfte und einer zweiten, insbesondere unteren, Reflektorhälfte reflektierbar ist.

Es kann auch vorgesehen sein, dass verschiedene, insbesondere nicht überlappende, Reflektorbereiche am Reflektor vorgesehen sind, wobei ein Bereich jeweils für eine Lichtfunktion verwendet wird. Damit kann die Lichtverteilung der einzelnen Lichtfunktionen individuell angepasst werden.

Das mindestens eine Abblendleuchtelement kann, insbesondere ausschließlich, von einem Reflektorbereich für das Abblendlicht reflektiert werden. Das mindestens eine Fernleuchtelement kann, insbesondere ausschließlich, von einem Reflektorbereich für das Fernlicht reflektiert werden. Das mindestens eine Positionsleuchtelement kann, insbesondere ausschließlich, von einem Reflektorbereich für das Positionslicht reflektiert werden.

Ein erfindungsgemäßes einspuriges Fahrzeug, insbesondere ein Motorrad, weist einen Scheinwerfer gemäß der Offenbarung der vorliegenden Anmeldung auf.

Es ist dabei vorgesehen, dass der Scheinwerfer vorzugsweise als Frontscheinwerfer eingesetzt wird. Dadurch zeigt die Längsrichtung des Leuchtelementträgers im Wesentlichen in Vorwärtsfahrtrichtung des einspurigen Fahrzeugs. Die mindestens zwei Positionsleuchtelemente sind damit in Vorwärtsfahrtrichtung vorne angeordnet.

Ein erfindungsgemäßes Verfahren zur Herstellung einer Beleuchtungsvorrichtung weist die folgenden Verfahrensschritte auf:
- es wird das erste wärmeleitende Bauteil an einer ersten Seite der Platine angeordnet,
- es wird das zweite wärmeleitende Bauteil an einer der ersten Seite der Platine gegenüberliegenden zweiten Seite angeordnet,
- es wird das erste wärmeleitende Bauteil am zweiten wärmeleitenden Bauteil, vorzugsweise mittels eines Befestigungsmittels, befestigt, wobei die Platine zwischen den beiden wärmeleitenden Bauteilen gehalten wird.

Damit kann einfach eine Beleuchtungsvorrichtung mit den beschriebenen, günstigen Eigenschaften hergestellt werden. Ebenso kann die Beleuchtungsvorrichtung zu Wartungszwecken oder zur Fehleranalyse leicht auseinander gebaut werden, um beispielsweise Zugang zur Platine mit der Steuervorrichtung und den Leuchtelementen zu erhalten.

Bei einem erfindungsgemäßen Verfahren zur Herstellung eines Scheinwerfers wird der Leuchtelementträger durch eine Durchführung im Reflektor geführt und an einer Befestigungsschnittstelle am Reflektor befestigt.

Es kann dabei vorgesehen sein, dass die Befestigungsschnittstelle für weitere Lampen, insbesondere Halogenlampen, geeignet ist. Die weiteren Lampen können dabei im Handel erhältlichen Standardausführungen entsprechen. Damit kann ein älterer Scheinwerfer mit der Beleuchtungsvorrichtung nachgerüstet werden. Diese Nachrüstung ist oftmals als "retrofit" bekannt.

Weitere bevorzugte Ausführungsbeispiele und Einzelheiten sind aus den Figuren ersichtlich. Dabei zeigen:
- Fig. 1a: Scheinwerfer mit einer Beleuchtungsvorrichtung in seitlicher Schnittdarstellungen
- Fig. 1b: Scheinwerfer mit einer Beleuchtungsvorrichtung in einer Schnittdarstellung von oben
- Fig. 2: Leuchtelementträger in einer Schnittdarstellung in seitlicher Ansicht
- Fig. 3a: Beleuchtungsvorrichtung in perspektivischer Ansicht
- Fig. 3b: Beleuchtungsvorrichtung in Vorderansicht
- Fig. 4a: Beleuchtungsvorrichtung in Aufsicht
- Fig. 4b: Beleuchtungsvorrichtung in Seitenansicht

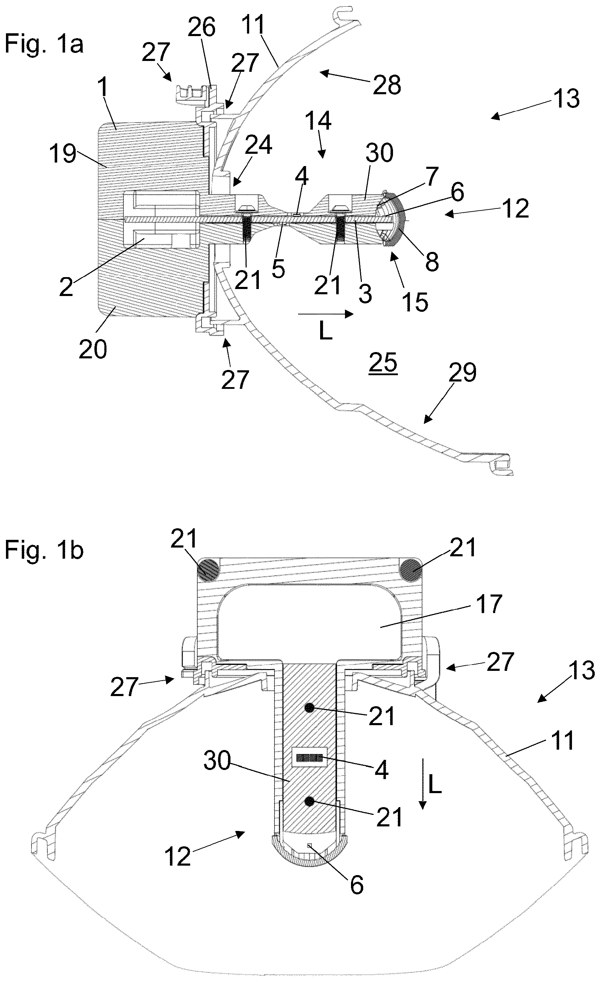

Die Figuren 1a und 1b zeigen Schnittdarstellungen eines Scheinwerfers 13 mit einer Beleuchtungsvorrichtung 12.

Ein solcher Scheinwerfer 13 kann beispielsweise an einem einspurigen Fahrzeug, insbesondere einem Motorrad, eingesetzt werden. Insbesondere kann ein solcher Scheinwerfer 13 als Frontscheinwerfer eingesetzt werden.

Der Scheinwerfer 13 weist einen konkaven Reflektor 11 auf, wobei im Betrieb Licht des mindestens einen Abblendleuchtelements 4 und/oder des mindestens einen Fernleuchtelements 5 und/oder der mindestens zwei Positionsleuchtelemente 6, 6a, 6b am Reflektor 11 reflektiert wird.

Das mindestens eine Abblendleuchtelement 4, das mindestens eine Fernleuchtelement 5 und/oder die mindestens zwei Positionsleuchtelemente 6, 6a, 6b sind als Halbleiterlichtquellen, insbesondere Leuchtdioden oder Laserdioden, ausgebildet. Es ist vorgesehen, dass sie im Betrieb weißes Licht ausstrahlen.

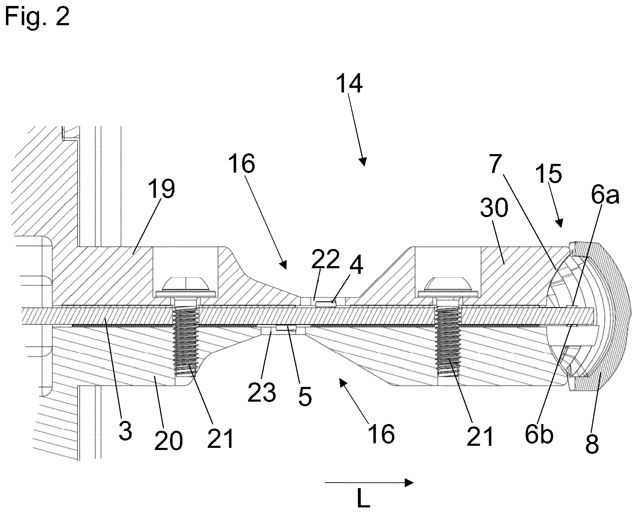

Die Fig. 2 zeigt eine Detailansicht der Ansicht in Fig. 1a, wobei die Beleuchtungsvorrichtung 12, insbesondere der Leuchtelementträger 14 der Beleuchtungsvorrichtung 12, im Detail gezeigt wird.

Einzelheiten des Scheinwerfers 13, der Beleuchtungsvorrichtung 12 und des Leuchtelementträgers 14 werden im Folgenden anhand der Figuren 1a, 1b und 2 dargelegt.

Der Leuchtelementträger 14 weist eine Längsrichtung L auf. Insbesondere kann der Leuchtelementträger 14 säulenförmig oder stabförmig ausgebildet sein.

Mindestens ein Abblendleuchtelement 4, mindestens ein Fernleuchtelement 5 und mindestens zwei Positionsleuchtelemente 6, 6a, 6b sind am Leuchtelementträger 14 angeordnet. Dabei sind die mindestens zwei Positionsleuchtelemente 6, 6a, 6b in einem, in Bezug auf die Längsrichtung L vorderen, Endbereich 15 des Leuchtelementträgers 14 angeordnet. Zudem ist das mindestens eine Abblendleuchtelement 4 und das mindestens eine Fernleuchtelement 5 in Bezug auf die Längsrichtung L hinter den mindestens zwei Positionsleuchtelementen 6, 6a, 6b angeordnet.

Das mindestens eine Abblendleuchtelement 4 ist an einer ersten, insbesondere oberen Seite, des Leuchtelementträgers 14 angeordnet, sodass sein Licht ausschließlich von einer ersten, insbesondere oberen, Reflektorhälfte 28 reflektiert wird.

Das mindestens eine Fernleuchtelement 5 ist an einer zweiten, insbesondere unteren Seite, des Leuchtelementträgers 14 angeordnet, sodass sein Licht ausschließlich von einer zweiten, insbesondere unteren, Reflektorhälfte 29 reflektiert wird.

Die mindestens zwei Positionsleuchtelemente 6, 6a, 6b sind an einer ersten, insbesondere oberen, und einer zweiten, insbesondere unteren, Seite des Leuchtelementträgers 14 angeordnet, sodass ihr Licht von einer ersten, insbesondere oberen, Reflektorhälfte 28 und/oder einer zweiten, insbesondere unteren, Reflektorhälfte 29 reflektierbar ist.

Der Reflektor 11 kann in seiner oberen Reflektorhälfte 28 und/oder seiner unteren Reflektorhälfte 29 mehrere Facetten aufweisen, womit die Lichtverteilung beeinflusst werden kann.

Die obere Reflektorhälfte 28 kann eine von der Form und/oder Größe der unteren Reflektorhälfte 29 verschiedene Form und/oder Größe aufweisen, wie aus der Fig. 1a ersichtlich.

Das mindestens eine Abblendleuchtelement 4 und das mindestens eine Fernleuchtelement 5 sind auf zwei entgegengesetzten Seiten des Leuchtelementträgers 14 angeordnet. Zudem ist das mindestens eine Abblendleuchtelement 4 und das mindestens eine Fernleuchtelement 5 in Längsrichtung L zueinander versetzt angeordnet. Damit ist ein Teil des Wärmeleitteils 30, welcher weiter unten genauer beschrieben wird, auch in einem den Leuchtelementen 4, 5 jeweils gegenüberliegenden Bereich angeordnet, womit Wärme besser abgeleitet werden kann.

Es sind mindestens zwei Positionsleuchtelemente 6a, 6b vorgesehen, welche auf zwei entgegengesetzten Seiten des Leuchtelementträgers 14 angeordnet sind.

Im Endbereich 15 ist ein transmittierendes optisches Element 8 um die mindestens zwei Positionsleuchtelemente 6, 6a, 6b angeordnet, wobei die Lichtverteilung der mindestens zwei Positionsleuchtelemente 6, 6a, 6b durch das transmittierende optische Element 8 beeinflussbar ist. Damit kann die Lichtverteilung verbreitert werden, sodass mehr Licht auf den Reflektor 11 gestreut wird.

Dabei ist das transmittierende optische Element 8 als Streuscheibe ausgebildet und/oder weist eine vertikale Riffelung und/oder aneinandergereihte Zylinderlinsen auf.

Im Endbereich 15 ist weiterhin ein reflektierendes optisches Element 7 um die mindestens zwei Positionsleuchtelemente 6, 6a, 6b angeordnet, sodass die Lichtverteilung der mindestens zwei Positionsleuchtelemente 6, 6a, 6b durch das reflektierende optische Element 7 beeinflussbar ist und sodass die mindestens zwei Positionsleuchtelemente 6, 6a, 6b von dem mindestens einen Abblendleuchtelement 4 und dem mindestens einen Fernleuchtelement 5 abgeschattet ist.

Das reflektierende optische Element 7 weist eine, vorzugsweise konkave, Kontur auf und ist in Bezug auf die Längsrichtung L hinter den mindestens zwei Positionsleuchtelementen 6, 6a, 6b angeordnet. Damit kann die Lichtausbeute in Vorwärtsrichtung erhöht werden.

Zudem ist das reflektierende optische Elemente 8 aus einem wärmeleitenden Material gefertigt ist, insbesondere ist das reflektierende optische Element 8 ein Teil des Wärmeleitteils 30, welcher weiter unten beschrieben wird. Damit kann Wärme abgeführt werden.

Die Beleuchtungsvorrichtung 12 weist einen Kühlkörper 1 auf, wobei der Leuchtelementträger 14 am Kühlkörper 1 angeordnet ist, sodass der, in Bezug auf die Längsrichtung L vordere, Endbereich 15 des Leuchtelementträgers 14 vom Kühlkörper 1 abgewandt ist.

Am Leuchtelementträger 14 ist ein Wärmeleitteil 30 angeordnet, wobei der Wärmeleitteil 30 mit dem Kühlkörper 1 verbunden ist, sodass Wärme vom Leuchtelementträger 14 in den Kühlkörper 1 leitbar ist. Vom Kühlkörper kann die Wärme an die Umgebung abgegeben werden.

Der Wärmeleitteil 30 ist mit dem Kühlkörper 1 einteilig verbunden. Insbesondere ist der Wärmeleitteil 30 und der Kühlkörper 1 als zwei durchgängige Aluminiumbauteile ausgebildet.

Das mindestens eine Abblendleuchtelement 4 und das mindestens eine Fernleuchtelement 5 und/oder die mindestens zwei Positionsleuchtelemente 6, 6a, 6b ist/sind jeweils in einer Ausnehmung 22, 23 des Wärmeleitteils 30 angeordnet und wird/werden vom Wärmeleitteil 30 umfasst.

Der Wärmeleitteil 30 weist im Bereich des mindestens einen Abblendleuchtelements 4 und des mindestens einen Fernleuchtelements 5 eine Verschmälerung 16 auf, sodass die Oberfläche der Leuchtelemente 4, 5 im Wesentlichen plan mit der Oberfläche des Wärmeleitteils 30 verläuft.

Der Wärmeleitteil 30 weist im Endbereich 15 eine, vorzugsweise konkave, Kontur auf, welche als reflektierendes optisches Element 7 für die mindestens zwei Positionsleuchtelemente 6, 6a, 6b fungiert.

Die Beleuchtungsvorrichtung 12 weist eine Platine 3 auf, wobei das mindestens eine Abblendleuchtelement 4 und/oder das mindestens eine Fernleuchtelement 5 und/oder die mindestens zwei Positionsleuchtelemente 6, 6a, 6b auf der Platine 3 angeordnet sind.

Die Platine 3 ragt vom Kühlkörper 1 in den Leuchtelementträger 14, insbesondere erstreckt sich die Platine 3 durch den gesamten Leuchtelementträger 14 in der Längsrichtung L.

In der Fig. 2 ist ersichtlich, dass sich die Platine 3 über den Wärmeleitteil 30 und seinem als reflektierendes optisches Element 7 ausgebildeten Ende hinaus erstreckt. In diesem Bereich sind die Positionsleuchtelemente 6a, 6b an gegenüberliegenden Seiten angeordnet.

An der Platine 3 ist eine Steuervorrichtung 2 angeordnet. Die Steuervorrichtung 2 ist zudem in einer Ausnehmung 17 des Kühlkörpers 1 angeordnet. Damit sind alle elektronischen Elemente auf einer Platine 3 angeordnet, womit eine Verkabelung nicht mehr nötig ist.

Ein erster wärmeleitender Bauteil 19 umfasst einen Oberteil des Kühlkörpers 1 und einen Oberteil des Wärmeleitteils 30 und ein zweiter wärmeleitender Bauteil 20 umfasst einen Unterteil des Kühlkörpers 1 und einen Unterteil des Wärmeleitteils 30. Die Platine 3 ist zwischen dem ersten wärmeleitenden Bauteil 19 und dem zweiten wärmeleitenden Bauteil 20 angeordnet. Der erste wärmeleitende Bauteil 19 und der zweite wärmeleitende Bauteil 20 sind mittels mindestens eines Befestigungsmittels 21, insbesondere einer Schraube, aneinander befestigt. Das mindestens eine Abblendleuchtelement 4 ist dabei in einer ersten Ausnehmung 22 des ersten wärmeleitenden Bauteils 19 angeordnet. Das mindestens eine Fernleuchtelement 5 ist in einer zweiten Ausnehmung 23 des zweiten wärmeleitenden Bauteils 20 angeordnet.

Ein Verfahren zur Herstellung einer Beleuchtungsvorrichtung 12 in den Figuren 1a, 1b und 2 kann die folgenden Verfahrensschritte aufweisen:
- es wird das erste wärmeleitende Bauteil 19 an einer ersten Seite der Platine 3 angeordnet,
- es wird das zweite wärmeleitende Bauteil 20 an einer der ersten Seite der Platine 3 gegenüberliegenden zweiten Seite angeordnet,
- es wird das erste wärmeleitende Bauteil 19 am zweiten wärmeleitenden Bauteil 20, vorzugsweise mittels eines Befestigungsmittels 21, befestigt, wobei die Platine 3 zwischen den beiden wärmeleitenden Bauteilen 19, 20 gehalten wird.

Der Reflektor 11 weist eine Durchführung 24 auf, wobei der Leuchtelementträger 14 im Montagezustand durch die Durchführung 24 ragt, und/oder der Leuchtelementträger 14 in einem vom Reflektor 11 erzeugten Innenraum 25 angeordnet ist und der Kühlkörper 1 außerhalb eines vom Reflektor 11 erzeugten Innenraums 25 angeordnet ist.

Ein Verfahren zur Herstellung eines Scheinwerfers 13 in den Figuren 1a, 1b und 2 kann vorsehen, dass der Leuchtelementträger 14 durch eine Durchführung 24 im Reflektor 11 geführt wird und an einer Befestigungsschnittstelle 27 am Reflektor 11 befestigt wird. Die Befestigungsschnittstelle 27 kann auch für weitere Lampen, insbesondere Halogenlampen, geeignet sein. Damit kann die Beleuchtungsvorrichtung 13 auch in bereits gebrauchten Scheinwerfern 13 verwendet werden.

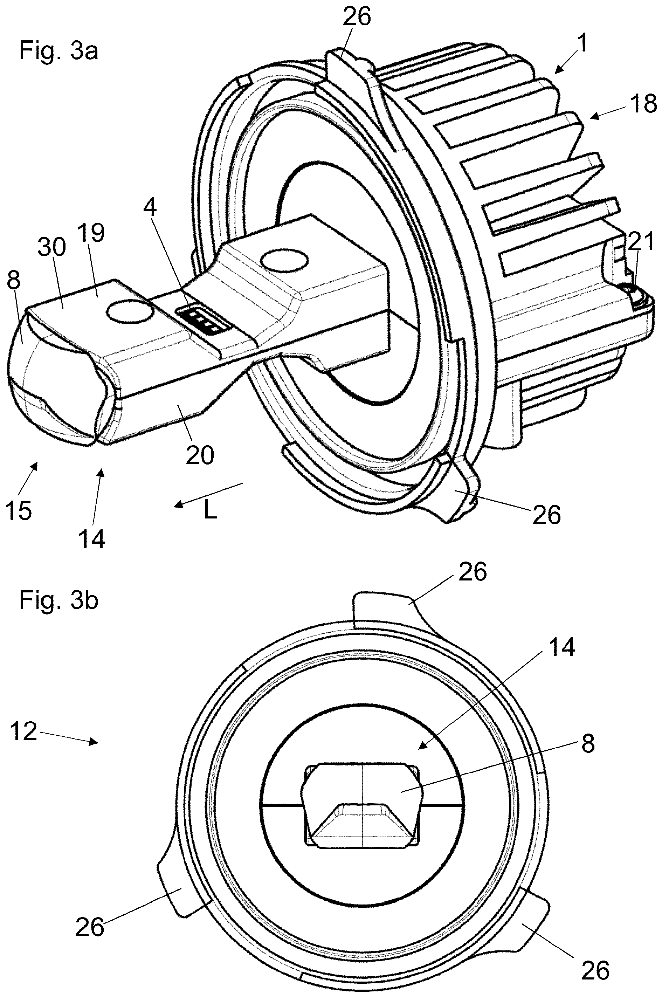

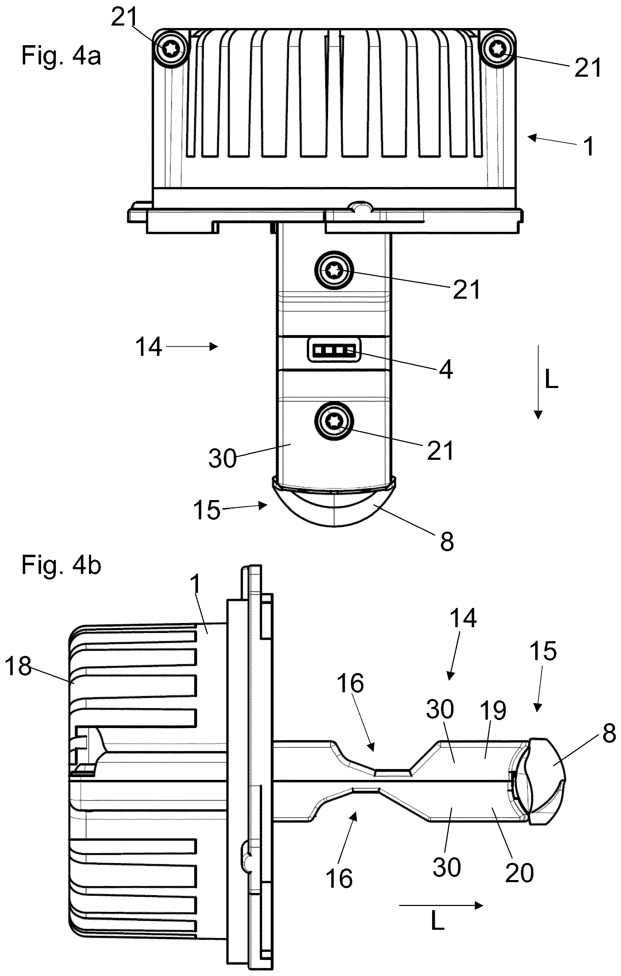

Die Figuren 3a, 3b, 4a und 4b zeigen verschiedene Ansichten einer Beleuchtungsvorrichtung 12, welche im Wesentlichen wie in den Figuren 1a, 1b und 2 ausgeführt ist.

Über die Ausführungen zu den Figuren 1a, 1b und 2 hinaus, sind in den Figuren 3a, 3b, 4a und 4b folgende Aspekte gut ersichtlich:
Der Kühlkörper 1 weist Kühlrippen 18 auf, sodass Wärme schneller an die Umgebung abgegeben werden kann.

Ebenso sind Befestigungsmittel 21 zur Befestigung des ersten wärmeleitenden Bauteils 19 mit dem zweiten wärmeleitenden Bauteil 20 im Bereich des Kühlkörpers 1 aus den Figuren 3a und 4a ersichtlich.

Aus der Fig. 4a geht hervor, dass vier nebeneinander angeordnete Abblendleuchtelemente 4 vorgesehen sind. Mit der Anzahl der Leuchtelemente kann der gewünschte Lichtstrom gewählt werden.

Der Kühlkörper 1 ist rund ausgeformt und weist am Rand Befestigungselemente 26 als Gegenstücke zur Befestigungsschnittstelle 27 am Scheinwerfer auf.

### Bezugszeichenliste:

- 1: Kühlkörper
- 2: Steuervorrichtung
- 3: Platine
- 4: Abblendleuchtelement
- 5: Fernleuchtelement
- 6: Positionsleuchtelement
- 6a: oberes Positionsleuchtelement
- 6b: unteres Positionsleuchtelement
- 7: reflektierendes optisches Element
- 8: transmittierendes optisches Element
- 9: Lichtstrahl
- 10: Lichtstrahl
- 11: Reflektor
- 12: Beleuchtungsvorrichtung
- 13: Scheinwerfer
- 14: Leuchtelementträger
- 15: Endbereich des Leuchtelementträgers
- 16: Verschmälerung
- 17: Ausnehmung im Kühlkörper
- 18: Kühlrippen
- 19: erster Bauteil des Kühlkörpers
- 20: zweiter Bauteil des Kühlkörpers
- 21: Befestigungsmittel
- 22: erste Ausnehmung
- 23: zweite Ausnehmung
- 24: Durchführung des Reflektors
- 25: Innenraum des Reflektors
- 26: Befestigungselemente
- 27: Befestigungsschnittstelle
- 28: erste Reflektorhälfte
- 29: zweite Reflektorhälfte
- 30: Wärmeleitteil

## Patentansprüche

1. Beleuchtungsvorrichtung (12) für einen Scheinwerfer (13), insbesondere eines einspurigen Fahrzeugs, umfassend einen Leuchtelementträger (14) mit einer Längsrichtung (L), wobei mindestens ein Abblendleuchtelement (4), mindestens ein Fernleuchtelement (5) und mindestens ein Positionsleuchtelement (6) am Leuchtelementträger (14) angeordnet sind, wobei das mindestens eine Positionsleuchtelement (6) in einem, in Bezug auf die Längsrichtung (L) vorderen, Endbereich (15) des Leuchtelementträgers (14) angeordnet ist und dass das mindestens eine Abblendleuchtelement (4) und das mindestens eine Fernleuchtelement (5) in Bezug auf die Längsrichtung (L) hinter dem mindestens einen Positionsleuchtelement (6) angeordnet sind, wobei mindestens zwei Positionsleuchtelemente (6a, 6b) vorgesehen sind, **dadurch gekennzeichnet, dass** die mindestens zwei Positionsleuchtelemente (6a, 6b) auf zwei entgegengesetzten Seiten des Leuchtelementträgers (14) angeordnet sind.

2. Beleuchtungsvorrichtung (12) nach dem vorhergehenden Anspruch, wobei im Endbereich (15) ein transmittierendes optisches Element (8) um die mindestens zwei Positionsleuchtelemente (6a, 6b) angeordnet ist, wobei die Lichtverteilung der mindestens zwei Positionsleuchtelemente (6a, 6b) durch das transmittierende optische Element (8) beeinflussbar ist, vorzugsweise wobei das transmittierende optische Element (8) als Streuscheibe ausgebildet ist und/oder eine vertikale Riffelung und/oder aneinandergereihte Zylinderlinsen aufweist.

3. Beleuchtungsvorrichtung (12) nach einem der vorhergehenden Ansprüche, wobei im Endbereich (15) ein reflektierendes optisches Element (7) bei den mindestens zwei Positionsleuchtelementen (6a, 6b) angeordnet ist, sodass die Lichtverteilung der mindestens zwei Positionsleuchtelemente (6a, 6b) durch das reflektierende optische Element (7) beeinflussbar ist und/oder sodass die mindestens zwei Positionsleuchtelemente (6a, 6b) von dem mindestens einen Abblendleuchtelement (4) und dem mindestens einen Fernleuchtelement (5) abgeschattet sind, vorzugsweise wobei
- das reflektierende optische Element (8) eine, vorzugsweise konkave, Kontur aufweist, und/oder
- in Bezug auf die Längsrichtung (L) hinter den mindestens zwei Positionsleuchtelementen (6a, 6b) angeordnet ist, und/oder
- das reflektierende optische Element (8) aus einem wärmeleitenden Material gefertigt ist.

4. Beleuchtungsvorrichtung (12) nach einem der vorhergehenden Ansprüche, wobei das mindestens eine Abblendleuchtelement (4) und das mindestens eine Fernleuchtelement (5) auf zwei entgegengesetzten Seiten des Leuchtelementträgers (14) angeordnet und/oder in Längsrichtung (L) zueinander versetzt angeordnet sind.

5. Beleuchtungsvorrichtung (12) nach einem der vorhergehenden Ansprüche, wobei die Beleuchtungsvorrichtung (12) einen Kühlkörper (1) aufweist, wobei der Leuchtelementträger (14) am Kühlkörper (1) angeordnet ist, sodass der, in Bezug auf die Längsrichtung (L) vordere, Endbereich (15) des Leuchtelementträgers (14) vom Kühlkörper (1) abgewandt ist, vorzugsweise wobei der Kühlkörper (1) Kühlrippen (18) aufweist und/oder wobei im Kühlkörper (1) eine Steuervorrichtung (2) angeordnet ist.

6. Beleuchtungsvorrichtung (12) nach einem der vorhergehenden Ansprüche, wobei am Leuchtelementträger (14) ein Wärmeleitteil (30) angeordnet ist, wobei der Wärmeleitteil (30) mit dem Kühlkörper (1) verbunden ist, sodass Wärme vom Leuchtelementträger (14) in den Kühlkörper (1) leitbar ist, vorzugsweise wobei
- der Wärmeleitteil (30) mit dem Kühlkörper (1) einteilig verbunden ist, und/oder
- das mindestens eine Abblendleuchtelement (4) und/oder das mindestens eine Fernleuchtelement (5) und/oder die mindestens zwei Positionsleuchtelemente (6a, 6b) in einer Ausnehmung (22, 23) des Wärmeleitteils (30) angeordnet ist/sind, und besonders bevorzugt vom Wärmeleitteil (30) umfasst wird/werden, und/oder
- der Wärmeleitteil (30) im Bereich des mindestens einen Abblendleuchtelements (4) und/oder des mindestens einen Fernleuchtelements (5) eine Verschmälerung (16) aufweist, sodass die Oberfläche der Leuchtelemente (4, 5) im Wesentlichen plan mit der Oberfläche des Wärmeleitteils (30) verläuft, und/oder
- der Wärmeleitteil (30) im Endbereich (15) eine, vorzugsweise konkave, Kontur aufweist, welche als reflektierendes optisches Element (7) für die mindestens zwei Positionsleuchtelemente (6a, 6b) fungiert.

7. Beleuchtungsvorrichtung (12) nach einem der vorhergehenden Ansprüche, wobei die Beleuchtungsvorrichtung (12) eine Platine (3) aufweist, wobei das mindestens eine Abblendleuchtelement (4) und/oder das mindestens eine Fernleuchtelement (5) und/oder die mindestens zwei Positionsleuchtelemente (6a, 6b) auf der Platine (3) angeordnet sind, vorzugsweise wobei
- die Platine (3) vom Kühlkörper (1) in den Leuchtelementträger (14) ragt, besonders bevorzugt wobei sich die Platine (3) durch den gesamten Leuchtelementträger (14) in der Längsrichtung (L) erstreckt, und/oder
- an der Platine (3) eine Steuervorrichtung (2) angeordnet ist.

8. Beleuchtungsvorrichtung (12) nach einem der Ansprüche 5 bis 7, wobei ein erster wärmeleitender Bauteil (19) einen Oberteil des Kühlkörpers (1) und einen Oberteil des Wärmeleitteil (30) umfasst und ein zweiter wärmeleitender Bauteil (20) einen Unterteil des Kühlkörpers (1) und einen Unterteil des Wärmeleitteils (30) umfasst, vorzugsweise wobei
- die Platine (3) zwischen dem ersten wärmeleitenden Bauteil (19) und dem zweiten wärmeleitenden Bauteil (20) angeordnet ist, und/oder
- der erste wärmeleitende Bauteil (19) und der zweite wärmeleitende Bauteil (20) mittels mindestens eines Befestigungsmittels (21), besonders bevorzugt einer Schraube, aneinander befestigbar sind, und/oder
- das mindestens eine Abblendleuchtelement (4) in einer ersten Ausnehmung (22) des ersten wärmeleitenden Bauteils (19) und das mindestens eine Fernleuchtelement (5) in einer zweiten Ausnehmung (23) des zweiten wärmeleitenden Bauteils (20) angeordnet sind.

9. Beleuchtungsvorrichtung (12) nach einem der vorhergehenden Ansprüche, wobei das mindestens eine Abblendleuchtelement (4), das mindestens eine Fernleuchtelement (5) und/oder die mindestens zwei Positionsleuchtelemente (6a, 6b)
- als Halbleiterlichtquellen, insbesondere Leuchtdioden oder Laserdioden, ausgebildet sind, und/oder
- im Betrieb weißes Licht ausstrahlen.

10. Scheinwerfer (13) mit einer Beleuchtungsvorrichtung (12) nach einem der vorhergehenden Ansprüche, wobei der Scheinwerfer (26) mindestens einen, vorzugsweise konkaven, Reflektor (11) aufweist, wobei im Betrieb Licht des mindestens einen Abblendleuchtelements (4) und/oder des mindestens einen Fernleuchtelements (5) und/oder der mindestens zwei Positionsleuchtelemente (6a, 6b) am Reflektor (11) reflektiert wird.

11. Scheinwerfer (13) nach Anspruch 10, wobei
- der Reflektor (11) eine Durchführung (24) aufweist, wobei der Leuchtelementträger (14) im Montagezustand durch die Durchführung (24) ragt, und/oder
- der Leuchtelementträger (14) in einem vom Reflektor (11) erzeugten Innenraum (25) angeordnet ist, und/oder
- der Kühlkörper (1) außerhalb eines vom Reflektor (11) erzeugten Innenraums (25) angeordnet ist.

12. Scheinwerfer (13) nach Anspruch 10 oder 11, wobei
- das mindestens eine Abblendleuchtelement (4) an einer ersten, insbesondere oberen Seite, des Leuchtelementträgers (14) angeordnet ist, sodass sein Licht ausschließlich von einer ersten, insbesondere oberen, Reflektorhälfte (28) reflektierbar ist, und/oder
- das mindestens eine Fernleuchtelement (5) an einer zweiten, insbesondere unteren Seite, des Leuchtelementträgers (14) angeordnet ist, sodass sein Licht ausschließlich von einer zweiten, insbesondere unteren, Reflektorhälfte (29) reflektierbar ist, und/oder
- die mindestens zwei Positionsleuchtelemente (6a, 6b) an einer ersten, insbesondere oberen, und einer zweiten, insbesondere unteren, Seite des Leuchtelementträgers (14) angeordnet sind, sodass ihr Licht von einer ersten, insbesondere oberen, Reflektorhälfte (28) und einer zweiten, insbesondere unteren, Reflektorhälfte (29) reflektierbar ist.

13. Einspuriges Fahrzeug, insbesondere Motorrad, mit einem Scheinwerfer (13) nach einem der Ansprüche 10 bis 12, wobei der Scheinwerfer (13) vorzugsweise als Frontscheinwerfer eingesetzt ist.

14. Verfahren zur Herstellung einer Beleuchtungsvorrichtung (12) nach Anspruch 8 oder 9, aufweisend die folgenden Verfahrensschritte:
- es wird das erste wärmeleitende Bauteil (19) an einer ersten Seite der Platine (3) angeordnet,
- es wird das zweite wärmeleitende Bauteil (20) an einer der ersten Seite der Platine (3) gegenüberliegenden zweiten Seite angeordnet,
- es wird das erste wärmeleitende Bauteil (19) am zweiten wärmeleitenden Bauteil (20), vorzugsweise mittels eines Befestigungsmittels (21), befestigt, wobei die Platine (3) zwischen den beiden wärmeleitenden Bauteilen (19, 20) gehalten wird.

15. Verfahren zur Herstellung eines Scheinwerfers (13) nach einem der Ansprüche 10 bis 12, wobei der Leuchtelementträger (14) durch eine Durchführung (24) im Reflektor (11) geführt wird und an einer Befestigungsschnittstelle (27) am Reflektor (11) befestigt wird, vorzugsweise wobei die Befestigungsschnittstelle (27) für weitere Lampen, insbesondere Halogenlampen, geeignet ist.

## Claims

1. A lighting device (12) for a headlight (13), in particular for a one-track vehicle, comprising a light-emitting element carrier (14) having a longitudinal direction (L), wherein at least one low-light-emitting element (4), at least one high-light-emitting element (5) and at least one position light-emitting element (6) are arranged at the light-emitting element carrier (14), wherein the at least one position light-emitting element (6) is arranged, in respect of the longitudinal direction (L), in a front facing end zone (15) of the light-emitting element carrier (14) and that the at least one low-light-emitting element (4) and the at least one high-light-emitting element (5) in respect of the longitudinal direction (L) are arranged behind the at least one position light-emitting element (6), wherein at least two position light-emitting elements (6a, 6b) are provided, **characterized in that** the at least two position light-emitting elements (6a, 6b) are arranged on two opposite side of the light-emitting element carrier (14).

2. A lighting device (12) according to the preceding claim, wherein, in the end zone (15), a transmitting optic element (8) is arranged around the at least two position light-emitting elements (6a, 6b), wherein the light distribution of the at least two position light-emitting elements (6a, 6b) can be influenced by the transmitting optic element (8), preferably, wherein the transmitting optic element (8) is in the form of a diffuser and/or has a vertical ribbing and/or cylindrical lenses that are lined up.

3. A lighting device (12) according to one of the preceding claims, wherein, in the end zone (15), a reflecting optic element (7) is arranged at the at least two position light-emitting elements (6a, 6b) in such way that the light distribution of the at least two position light-emitting elements (6a, 6b) can be influenced by the reflecting optic element (7) and/or in such way that the at least two position light-emitting elements (6a, 6b) are shielded from the at least one low-light-emitting element (4) and the at least one high-light-emitting element (5), preferably wherein
- the reflecting optic element (8) has a, preferably concave, outline, and/or
- in respect of the longitudinal direction (L), is arranged behind the at least two position light-emitting elements (6a, 6b), and/or
- the reflecting optic element (8) is made of a heat-conducting material.

4. A lighting device (12) according to one of the preceding claims, wherein the at least one low-light-emitting element (4) and the at least one high-light-emitting element (5) are arranged on two opposite sides of the light-emitting element carrier (14) and/or are arranged in the longitudinal direction (L) offset to one another.

5. A lighting device (12) according to one of the preceding claims, wherein the lighting device (12) has a heat sink (1), wherein the light-emitting element carrier (14) is arranged at the heat sink (1) so that, in respect of the longitudinal direction (L), the front facing end zone (15) of the light-emitting element carrier (14) is facing away from the heat sink (1), preferably wherein the heat sink (1) has cooling ribs (18) and/or wherein a control device (2) is arranged in the heat sink (1).

6. A lighting device (12) according to one of the preceding claims, wherein a heat-conducting member (30) is arranged at the light-emitting element carrier (14), wherein the heat-conducting member (30) is connected with the heat sink (1) in such way that heat can be conducted from the light-emitting element carrier (14) into the heat sink (1), preferably wherein
- the heat-conducting member (30) is connected with the heat sink (1) in one piece, and/or
- the at least one low-light-emitting element (4) and/or the at least one high-light-emitting element (5) and/or he at least two position light-emitting elements (6a, 6b) is/are arranged in a recess (22, 23) of the heat-conducting member (30), and particularly preferably, is/are enclosed by the heat-conducting member (30), and/or
- the heat-conducting member (30) has a narrowing (16) in the area of the at least one low-light-emitting element (4) and/or the at least one high-light-emitting element (5) in such way that the surface of the light-emitting elements (4, 5) essentially run even with the surface of the
heat-conducting member (30), and/or
- the heat-conducting member (30), in the end zone (15), has a, preferably concave, outline that serves as reflecting optic element (7) for the at least one position light-emitting element (6).

7. A lighting device (12) according to one of the preceding claims, wherein the lighting device (12) has a circuit board (3), wherein the at least one low-light-emitting element (4) and/or the at least one high-light-emitting element (5) and/or the at least two position light-emitting elements (6a, 6b) are arranged on the circuit board (3), preferably wherein
- the circuit board (3) projects from the heat sink (1) into the light-emitting element carrier (14), particularly preferably, wherein the circuit board (3) extends through the entire light-emitting element carrier (14) in the longitudinal direction (L), and/or
- a control device (2) is arranged at the circuit board (3).

8. A lighting device (12) according to one of the claims 5 to 7, wherein a first heat-conducting component (19) comprises a top part of the heat sink (1) and a top part of the heat-conducting member (30) and a second heat-conducting member (20) comprises a bottom part of the heat sink (1) and a bottom part of the heat-conducting member (30), preferably wherein
- the circuit board (3) is arranged between the first heat-conducting component (19) and the second heat-conducting component (20), and/or
- the first heat-conducting component (19) and the second heat-conducting component (20) can be attached to each other by means of at least one fixing means (21), particularly preferably, a screw, and/or
- the at least one low-light-emitting element (4) is arranged in a first recess (22) of the first heat-conducting component (19) and the at least one high-light-emitting element (5) is arranged in a second recess (23) of the second heat-conducting component (20).

9. A lighting device according to one of the preceding claims, wherein the at least one low-light-emitting element (4), the at least one high-light-emitting element (5) and/or the at least two position light-emitting elements (6a, 6b)
- are in the form of semi-conductor light sources, in particular light-emitting diodes or laser diodes, and/or
- radiate white light during operation.

10. A headlight (13) having a lighting device (12) according to one of the preceding claims, wherein the headlight (13) has at least one, preferably concave, reflector (11), wherein light of the at least one low-light-emitting element (4) and/or of the at least one high-light-emitting element (5) and/or of the at least two position light-emitting elements (6a, 6b) is reflected at the reflector (11) during operation.

11. A headlight (13) according to claim 10, wherein
- the reflector (11) has a passage (24), wherein the light-emitting element carrier (14) projects through the passage (24) in the state of being mounted, and/or
- the light-emitting element carrier (14) is arranged in an interior (25) generated by the reflector (11), and/or
- the heat sink (1) is arranged outside of an interior (25) generated by the reflector (11).

12. A headlight (13) according to claim 10 or 11, wherein
- the at least one low-light-emitting element (4) is arranged at a first, in particular at a top, side of the light-emitting element carrier (14) is such way that its light can be reflected exclusively from a first, in particular from a top, half of the reflector (28), and/or
- the at least one high-light-emitting element (5) is arranged at a second, in particular at a bottom, side of the light-emitting element carrier (14) in such way that its light can be reflected exclusively from a second, in particular from a bottom, half of the reflector (29), and/or
- the at least two position light-emitting elements (6a, 6b) are arranged at a first, in particular a top, side, and a second, in particular, a bottom, side of the light-emitting element carrier (14) in such way that their light can be reflected from a first, in particular from a top, half of the reflector (28) and/or from a second, in particular from a bottom, half of the reflector (29).

13. A one-track vehicle, in particular a motorcycle, having a headlight (13) according to one of the claims 10 to 12, wherein the headlight (13) is preferably used as front headlight.

14. A method for manufacturing a lighting device (12) according to claim 8 or 9, having the following method steps:
- the first heat-conducting component (19) is arranged at a first side of the circuit board (3),
- the second heat-conducting component (20) is arranged at a second side opposite of the first side of the circuit board (3),
- the first heat-conducting component (19) is attached to the second heat-conducting component (20), preferably by means of a fixing means (21), wherein the circuit board (3) is held between the two heat-conducting components (19, 20).

15. A method for manufacturing a headlight (13) according to one of the claims 10 to 12, wherein the light-emitting element carrier (14) is led through a passage (24) in the reflector (11) and is attached at a fixing interface (27) at the reflector (11), preferably wherein the fixing interface (27) is suitable for further lamps, especially halogen lamps.

## Revendications

1. Dispositif d'éclairage (12) pour un projecteur (13), en particulier d'un véhicule à une voie, comprenant un support d'élément lumineux (14) avec une direction longitudinale (L), dans lequel au moins un élément de feu de croisement (4), au moins un élément de feu de route (5) et au moins un élément de feu de position (6) sont disposés sur le support d'élément lumineux (14), dans lequel l'au moins un élément de feu de position (6) est disposé dans une zone d'extrémité (15), avant par rapport à la direction longitudinale (L), du support d'élément lumineux (14) et que l'au moins un élément de feu de croisement (4) et l'au moins un élément de feu de route (5) sont disposés derrière l'au moins un élément de feu de position (6) par rapport à la direction longitudinale (L), dans lequel au moins deux éléments de feu de position (6a, 6b) sont prévus, **caractérisé en ce que** les au moins deux éléments de feu de position (6a, 6b) sont disposés sur deux côtés opposés du support d'élément lumineux (14).

2. Dispositif d'éclairage (12) selon la revendication précédente, dans lequel un élément optique de transmission (8) est disposé dans la zone d'extrémité (15) autour des au moins deux éléments de feu de position (6a, 6b), dans lequel la distribution de lumière des au moins deux éléments de feu de position (6a, 6b) peut être influencée par l'élément optique de transmission (8), de préférence dans lequel l'élément optique de transmission (8) est réalisé en tant que diffuseur et/ou présente une cannelure verticale et/ou des lentilles cylindriques juxtaposées.

3. Dispositif d'éclairage (12) selon l'une quelconque des revendications précédentes, dans lequel un élément optique réfléchissant (7) est disposé dans la zone d'extrémité (15) près des au moins deux éléments de feu de position (6a, 6b) de sorte que la distribution de lumière des au moins deux éléments de feux de position (6a, 6b) puisse être influencée par l'élément optique réfléchissant (7) et/ou de sorte que les au moins deux éléments de feu de position (6a, 6b) soient ombragés par l'au moins un élément de feu de croisement (4) et l'au moins un élément de feu de route (5), de préférence dans lequel
- l'élément optique réfléchissant (8) présente un contour, de préférence concave, et/ou
- est disposé derrière les au moins deux éléments de feu de position (6a, 6b) par rapport à la direction longitudinale (L), et/ou
- l'élément optique réfléchissant (8) est fabriqué dans un matériau thermoconducteur.

4. Dispositif d'éclairage (12) selon l'une quelconque des revendications précédentes, dans lequel l'au moins un élément de feu de croisement (4) et l'au moins un élément de feu de route (5) sont disposés sur deux côtés opposés du support d'élément lumineux (14) et/ou disposés de manière décalée l'un par rapport à l'autre dans la direction longitudinale (L).

5. Dispositif d'éclairage (12) selon l'une quelconque des revendications précédentes, dans lequel le dispositif d'éclairage (12) présente un dissipateur thermique (1), dans lequel le support d'élément lumineux (14) est disposé sur le dissipateur thermique (1) de sorte que la zone d'extrémité (15), avant par rapport à la direction longitudinale (L), du support d'élément lumineux (14), soit opposée au dissipateur thermique (1), de préférence dans lequel le dissipateur thermique (1) présente des ailettes de refroidissement (18) et/ou dans lequel un dispositif de commande (2) est disposé dans le dissipateur thermique (1).

6. Dispositif d'éclairage (12) selon l'une quelconque des revendications précédentes, dans lequel une pièce conductrice de chaleur (30) est disposée sur le support d'élément lumineux (14), dans lequel la pièce conductrice de chaleur (30) est reliée au dissipateur thermique (1) de sorte que de la chaleur soit conductible du support d'élément lumineux (14) dans le dissipateur thermique (1), de préférence dans lequel
- la pièce conductrice de chaleur (30) est reliée d'une seule pièce au dissipateur thermique (1), et/ou
- l'au moins un élément de feu de croisement (4) et/ou l'au moins un élément de feu de route (5) et/ou les au moins deux éléments de feu de position (6a, 6b) est/sont disposés dans un évidement (22, 23)
de la pièce conductrice de chaleur (30) et de manière particulièrement préférée est/sont entourés par la pièce conductrice de chaleur (30), et/ou
- la pièce conductrice de chaleur (30) présente un rétrécissement (16) dans la zone de l'au moins un élément de feu de croisement (4) et/ou de l'au moins un élément de feu de route (5) de sorte que la surface des éléments lumineux (4, 5) s'étende de manière sensiblement plane avec la surface de la pièce conductrice de chaleur (30), et/ou
- la pièce conductrice de chaleur (30) présente dans la zone d'extrémité (15) un contour, de préférence concave, lequel sert d'élément optique réfléchissant (7) pour les au moins deux éléments de feu de position (6a, 6b).

7. Dispositif d'éclairage (12) selon l'une quelconque des revendications précédentes, dans lequel le dispositif d'éclairage (12) présente une platine (3), dans lequel l'au moins un élément de feu de croisement (4) et/ou l'au moins un élément de feu de route (5) et/ou les au moins deux éléments de feu de position (6a, 6b) sont disposés sur la platine (3), de préférence dans lequel
- la platine (3) dépasse du dissipateur thermique (1) dans le support d'élément lumineux (14), de manière particulièrement préférée, dans lequel la platine (3) s'étend à travers l'ensemble du support d'élément lumineux (14) dans la direction longitudinale (L), et/ou
- un dispositif de commande (2) est disposé sur la platine (3).

8. Dispositif d'éclairage (12) selon l'une quelconque des revendications 5 à 7, dans lequel un premier composant conducteur de chaleur (19) comprend une partie supérieure du dissipateur thermique (1) et une partie supérieure de la pièce conductrice de chaleur (30) et un deuxième composant conducteur de chaleur (20) comprend une partie inférieure du dissipateur thermique (1) et une partie inférieure de la pièce conductrice de chaleur (30), de préférence dans lequel
- la platine (3) est disposée entre le premier composant conducteur de chaleur (19) et le deuxième composant conducteur de chaleur (20), et/ou
- le premier composant conducteur de chaleur (19) et le deuxième composant conducteur de chaleur (20) peuvent être fixés l'un à l'autre au moyen d'au moins un moyen de fixation (21), de manière particulièrement préférée une vis, et/ou
- l'au moins un élément de feu de croisement (4) est disposé dans un premier évidement (22) du premier composant conducteur de chaleur (19) et l'au moins un élément de feu de route (5) dans un deuxième évidement (23) du deuxième composant conducteur de chaleur (20).

9. Dispositif d'éclairage (12) selon l'une quelconque des revendications précédentes, dans lequel l'au moins un élément de feu de croisement (4), l'au moins un élément de feu de route (5) et/ou les au moins deux éléments de feu de position (6a, 6b)
- sont réalisés en tant que sources de lumière semiconductrices, en particulier diodes électroluminescentes ou diodes laser, et/ou
- émettent une lumière blanche pendant le fonctionnement.

10. Projecteur (13) avec un dispositif d'éclairage (12) selon l'une quelconque des revendications précédentes, dans lequel le projecteur (26) présente au moins un réflecteur (11), de préférence concave, dans lequel pendant le fonctionnement la lumière de l'au moins un élément de feu de croisement (4) et/ou de l'au moins un élément de feu de route (5) et/ou des au moins deux éléments de feu de position (6a, 6b) est réfléchie sur le réflecteur (11).

11. Projecteur (13) selon la revendication 10, dans lequel
- le réflecteur (11) présente un passage (24), dans lequel le support d'élément lumineux (14) dépasse à l'état monté à travers le passage (24), et/ou le support d'élément lumineux (14) est disposé dans un espace intérieur (25) généré par le réflecteur (11), et/ou
- le dissipateur thermique (1) est disposé à l'extérieur d'un espace intérieur (25) généré par le réflecteur (11).

12. Projecteur (13) selon la revendication 10 ou 11, dans lequel
- l'au moins un élément de feu de croisement (4) est disposé sur un premier côté, en particulier supérieur, du support d'élément lumineux (14) de sorte que sa lumière puisse être réfléchie exclusivement par une première moitié de réflecteur (28), en particulier supérieure, et/ou
- l'au moins un élément de feu de route (5) est disposé sur un deuxième côté, en particulier inférieur, du support d'élément lumineux (14) de sorte que sa lumière puisse être réfléchie exclusivement par une deuxième moitié de réflecteur (29), en particulier inférieure, et/ou
- les au moins deux éléments de feux de position (6a, 6b) sont disposés sur un premier côté, en particulier supérieur, et un deuxième côté, en particulier inférieur, du support d'élément lumineux (14), de sorte que leur lumière puisse être réfléchie par une première moitié de réflecteur (28), en particulier supérieure, et une deuxième moitié de réflecteur (29), en particulier inférieure.

13. véhicule à une voie, en particulier moto, avec un projecteur (13) selon l'une quelconque des revendications 10 à 12, dans lequel le projecteur (13) est de préférence utilisé comme projecteur avant.

14. Procédé pour la fabrication d'un dispositif d'éclairage (12) selon la revendication 8 ou 9, présentant les étapes de procédé suivantes :
- le premier composant conducteur de chaleur (19) est disposé sur un premier côté de la platine (3),
- le deuxième composant conducteur de chaleur (20) est disposé sur un deuxième côté opposé au premier côté de la platine (3),
- le premier composant conducteur de chaleur (19) est fixé au deuxième composant conducteur de chaleur (20), de préférence à l'aide d'un moyen de fixation (21), dans lequel la platine (3) est maintenue entre les deux composants conducteurs de chaleur (19, 20).

15. Procédé pour la fabrication d'un projecteur (13) selon l'une quelconque des revendications 10 à 12, dans lequel le support d'élément lumineux (14) est guidé à travers un passage (24) dans le réflecteur (11) et est fixé à une interface de fixation (27) sur le réflecteur (11), de préférence dans lequel l'interface de fixation (27) est adaptée à d'autres lampes, en particulier des lampes halogènes.
